# EUROPÄISCHE PATENTANMELDUNG

(11) **EP 2 130 729 A2**
(43) Veröffentlichungstag der Anmeldung: **09.12.2009**
(21) Anmeldenummer: 09100308.7
(22) Anmeldetag: 29.05.2009
(51) Int. Cl.: B60S 1/34

(54) **Wischerwellenanordnung sowie Scheibenwischanlage**

(30) Priorität: 02.06.2008 DE 102008002148
(71) Anmelder: Robert Bosch GmbH, 70442 Stuttgart (DE)
(72) Erfinder: Benner, Andreas, 77830, Buehlertal (DE); Weiler, Michael, 77833, Ottersweier (DE); Boos, Tino, 76532, Baden-Baden (DE); Bicskei, Zoltan, 1105, Budapest (HU); Kraus, Achim, 77815, Buehl (DE)

(57) **Zusammenfassung**

Die Erfindung betrifft eine Wischerwellenanordnung (1) für eine Scheibenwischanlage (2), insbesondere in einem Kraftfahrzeug, mit einer pendelnd antreibbaren Wischerwelle (4), mit einer von der Wischerwelle (4) durchsetzten oberen Schutzkappe (22) zum Schutz einer Lagereinheit (11) für die Welle vor Wasser und/oder Schmutz. Erfindungsgemäß ist vorgesehen, dass die obere Schutzkappe (22) gegen axiales Verstellen entlang der Wischerwelle (4) an einer Oberflächenstruktur (19) der Wischerwelle (4) gesichert ist. Ferner betrifft die Erfindung eine Scheibenwischanlage (2).

## Beschreibung

### Stand der Technik

Die Erfindung betrifft eine Wischerwellenanordnung für eine Scheibenwischanlage gemäß dem Oberbegriff des Anspruchs 1 sowie eine Scheibenwischanlage gemäß Anspruch 12.

Bei Frontscheibenwischanlagen ist es bekannt, oberhalb einer Lagereinheit für eine Wischerwelle eine Kunststoff-Schutzkappe vorzusehen, die von der Wischerwelle durchsetzt ist und ein Eindringen von Wasser und Schmutz in eine axial benachbarte Lagereinheit verhindern soll. Nachteilig bei der bekannten Ausführung ist, dass ein derartiger Schutz gegen Wasser und Schmutz nicht immer gegeben ist, insbesondere deshalb, weil die Schutzkappe relativ zu der Lagereinheit keine definierte Position einnimmt.

### Offenbarung der Erfindung

### Technische Aufgabe

Der Erfindung liegt daher die Aufgabe zugrunde, eine Wischerwellenanordnung vorzuschlagen, die derart aufgebaut ist, dass die Gefahr des Eindringens von Wasser und/oder Schmutz in die Lagereinheit für die Wischerwelle minimiert ist. Ferner besteht die Aufgabe darin, eine Scheibenwischanlage mit einer entsprechend optimierten Wischerwellenanordnung vorzuschlagen.

### Technische Lösung

Diese Aufgabe wird hinsichtlich der Wischerwellenanordnung mit den Merkmalen des Anspruchs 1 und hinsichtlich der Scheibenwischanlage mit den Merkmalen des Anspruchs 12 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, die obere Schutzkappe an einer Oberflächenstruktur der Wischerwelle gegen ein axiales Verschieben zu sichern. Anders ausgedrückt wird die Schutzkappe, vorzugsweise durch Verformen derselben, aufgrund von nach radial innen wirkenden Kräften bei der Montage formschlüssig mit der Oberflächenstruktur der Schutzkappe verbunden, d.h. an dieser festgelegt, wodurch sichergestellt ist, dass die Schutzkappe im Betrieb einer mit einer derartigen Wischerwellenanordnung ausgestatteten, vorzugsweise als Frontscheibenwischanlage ausgebildeten, Scheibenwischanlage in einer, den Schutz gegen Wassereintritt und/oder Schmutzeintritt in die Lagereinheit garantierenden, Position verbleibt.

In Weiterbildung der Erfindung ist mit Vorteil vorgesehen, dass es sich bei der Oberflächenstruktur, an der die obere Schutzkappe durch Formschluss, insbesondere durch Verrasten, festgelegt ist dieselbe Oberflächenstruktur ist, die zum Halten einer Federscheibe (Speednut) dient, die die Funktion einer Axialsicherung für die Lagereinheit hat. Anders ausgedrückt erhält die Oberflächenstruktur hierdurch eine Doppelfunktion - sie sichert nicht nur die obere Schutzkappe gegen ein unbeabsichtigtes axiales Verschieben relativ zu der Wischerwelle und damit zu der Lagereinheit, sondern dient auch zur krallenden Aufnahme der als Axialsicherung für die Lagereinheit dienenden Federscheibe. Bevorzugt ist die Federscheibe dabei in einem von der Schutzkappe überdeckten, also vor Wasser- und/oder Schmutzeintritt geschützten Bereich angeordnet.

Insbesondere zum Festlegen einer Federscheibe, aber auch zum Sichern der oberen Schutzkappe gegen ein unbeabsichtigtes axiales Verschieben ist es bevorzugt, die Oberflächenstruktur, zumindest abschnittsweise, als Rillenstruktur auszubilden, wobei die Rillenstruktur bevorzugt eine Vielzahl von in axialer Richtung benachbarten, kreisringförmigen Rillen aufweist, in die sich die Federscheibe verkrallen kann und die sich in die, vorzugsweise als Kunststoffspritzgussteil ausgebildete Schutzkappe einformen kann. Dabei ist eine Ausführungsform realisierbar, bei der die Schutzkappe vor der Montage in dem mit der Rillenstruktur bei der Montage in Kontakt tretenden Bereich eine glatte Oberfläche aufweist, in die sich die Rillenstruktur einformt. Alternativ ist es denkbar, die Schutzkappe in dem späteren Kontaktbereich zur Oberflächenstruktur ebenfalls mit einer, vorzugsweise zur Oberflächenstruktur der Wischerwelle formkongruenten, Oberflächenstruktur zum Herstellen einer formschlüssigen Verbindung auszustatten.

Besonders bevorzugt ist eine Ausführungsform der Wischerwellenanordnung, bei der die obere Schutzkappe einen um die Wischerwelle umlaufenden Rockabschnitt aufweist, der sich in axialer Richtung über eine dem Befestigungsende der Wischerwelle für einen Wischerarm zugewandte obere Stirnseite der Lagereinheit in axialer Richtung nach unten hinauserstreckt. Hierdurch wird verhindert, dass von oben auf die Schutzkappe auftreffendes Wasser in einen Bereich unterhalb der Schutzkappe und damit in die Lagereinheit hineingelangen kann. Bevorzugt ist die Axialerstreckung des Rockabschnittes so groß gewählt, dass eine Sicherung der Lagereinheit vor Wasser/und Schmutz über einen großen axialen Befestigungsbereich der Schutzkappe relativ zu der Wischerwelle garantiert ist. Bevorzugt erstreckt sich der Rockabschnitt in axialer Richtung mindestens soweit, dass sämtliche oberen, insbesondere in radialer Richtung verlaufenden Spalte im oberen Bereich der Lagereinheit seitlich in axialer Richtung von dem Rockabschnitt der Schutzkappe überragt werden.

In Weiterbildung der Erfindung ist mit Vorteil vorgesehen, dass der Rockabschnitt der oberen Schutzkappe, vorzugsweise im Bereich seines axial unteren Randes, einen sich nach radial innen erstreckenden Hintergreifabschnitt aufweist, mit dem der Rockabschnitt ein Bauelement der Lagereinheit, beispielsweise eine Anlaufscheibe, randseitig in radialer Richtung nach innen hintergreift, so dass auch von unten nach oben spritzendes Wasser sicher am Eintritt in die Lagereinheit bzw. in den von der Schutzkappe überdeckten Bereich verhindert wird.

Um die Montage sowie die Produktion der Schutzkappe als Spritzgussteil im Hinblick auf eine erleichterte Entformbarkeit zu optimieren, ist eine Ausführungsform bevorzugt, bei der die obere Schutzkappe, vorzugsweise an mehreren in Umfangsrichtung beabstandeten Stellen, über einen Axialbereich geschlitzt ausgebildet ist. Besonders bevorzugt ist es dabei nur einen gegebenenfalls vorgesehenen Hintergreifabschnitt mit mehreren in Umfangsrichtung beabstandeten Schlitzen zu versehen.

In Weiterbildung der Erfindung ist mit Vorteil vorgesehen, dass zum Schutz der Lagereinheit, insbesondere zum Schutz des unteren Endbereichs der Lagereinheit, vor von oben entlang der Lagereinheit nach unten strömendem Wasser eine an der Lagereinheit festgelegte Schutzschürze vorgesehen ist, die eine untere Stirnseite der Lagereinheit in axialer Richtung, also in eine Richtung von dem freien Ende der Wischerwelle weg, überragt und somit ein Entlangströmen von Wasser an der unteren Stirnseite der Lagereinheit verhindert.

Zusätzlich oder alternativ zu einer derartigen Schutzschürze kann eine untere Schutzkappe vorgesehen werden, die die Lagereinheit vor Spritzwasser und/oder Schmutz von der Unterseite her schützt. Bevorzugt weist die untere Schutzkappe einen sich in axialer Richtung nach oben erstreckenden Rockabschnitt auf, der die untere Stirnseite der Lagereinheit in axialer Richtung überragt. Von besonderem Vorteil ist eine Ausführungsform, bei der die untere Schutzkappe identisch ausgebildet ist wie die obere Schutzkappe, um somit die Bauteilvielfalt zu minimieren.

Im Hinblick auf die Festlegung bzw. axiale Sicherung der unteren Schutzkappe gibt es unterschiedliche Möglichkeiten. Für den Fall, dass eine untere, an der Lagereinheit festgelegte Schutzschürze vorgesehen ist, ist es möglich, die Schutzkappe formschlüssig mit der Schutzschürze zu verbinden. Alternativ ist es möglich, die untere Schutzkappe analog wie die obere Schutzkappe an der Wischerwelle, insbesondere an einer, vorzugsweise rillenförmigen, Oberflächenstruktur der Wischerwelle festzulegen. Im Falle des Vorsehens einer an der Oberflächenstruktur festgelegten Schutzschürze ist es bevorzugt, wenn die untere Schutzkappe mit der unteren Schutzschürze eine Art Labyrinthdichtung bildet, was bevorzugt dadurch erreicht werden kann, dass die untere Schutzschürze einen oberen Rand eines in axialer Richtung nach oben gerichteten umlaufenden Rockabschnitts der unteren Schutzkappe in axialer Richtung nach unten überragt.

Eine weitere Möglichkeit besteht darin, die untere Schutzschürze derart auszubilden, dass sie mit einem axial unteren Abschnitt in radialer Richtung nach innen greift und somit gleichzeitig die Funktion einer unteren Schutzkappe übernimmt - die untere Schutzschürze ist also einteilig mit der unteren Schutzkappe ausgebildet.

Die Erfindung führt auch auf eine Scheibenwischanlage, insbesondere für ein Kraftfahrzeug, mit einer Wischerwellenanordnung nach einem der vorhergehenden Ansprüche. Besonders bevorzugt ist dabei eine Ausführungsform, bei der die Scheibenwischanlage als Frontscheibenwischanlage ausgebildet ist und die Wischerwelle mittels eines Kurbelgestänges pendelnd angetrieben ist. Bei einer alternativen Ausführungsform ist die Wischerwelle unmittelbar von einem, insbesondere als Umsetzergetriebe ausgebildeten Verzahnungsgetriebe angetrieben, wobei in diesem Fall auf ein Kurbelgestänge zum pendelnden Antreiben der Wischerwelle verzichtet werden kann.

### Kurze Beschreibung der Zeichnungen

Weitere Vorteile, Merkmale und Einzelheiten ergeben sich aus der nachfolgenden Beschreibung bevorzugter Ausführungsbeispiele sowie anhand der Zeichnungen. Diese zeigen in:
- Fig. 1:: in einer schematischen Darstellung den grundsätzlichen Aufbau einer Wischerwellenanordnung einer Scheibenwischanlage,
- Fig. 2:: in einer teilgeschnittenen, perspektivischen Darstellung eine mögliche Ausbildung und Anordnung einer oberen Schutzkappe, die eine obere Stirnseite einer Lagereinheit in axialer Richtung nach unten überragt,
- Fig. 3:: in einer teilgeschnittenen, perspektivischen Darstellung eine alternative Ausführungsform einer oberen Schutzkappe, die mit einem Hintergreifabschnitt eine obere Stirnseite in radialer Richtung nach innen überragt,
- Fig. 4:: in einer teilgeschnittenen, perspektivischen Darstellung eine mögliche Anordnung und Ausbildung einer unteren, an der Lagereinheit festgelegten Schutzschürze,
- Fig. 5:: in einer teilgeschnittenen, perspektivischen Darstellung eine mögliche Kombination aus einer unteren Schutzschürze und einer unteren Schutzkappe, wobei die Schutzkappe an einer Oberflächenstruktur der Wischerwelle festgelegt ist,
- Fig. 6:: in einer teilgeschnittenen, perspektivischen Darstellung eine alternative Kombination aus einer unteren Schutzschürze und einer unteren Schutzkappe, wobei die Schutzkappe formschlüssig an der Schutzschürze festgelegt ist,
- Fig. 7:: in einer teilgeschnittenen, perspektivischen Darstellung eine alternative Ausführungsform einer Schutzschürze, die gleichzeitig die Funktion einer unteren Schutzkappe übernimmt,
- Fig. 8:: in einer teilgeschnittenen, perspektivischen Darstellung eine obere Schutzkappe, die bei identischer Ausbildung auch als untere Schutzkappe eingesetzt werden kann und
- Fig. 9:: in einer teilgeschnittenen, perspektivischen Darstellung die in Fig. 8 gezeigte Schutzkappe als untere Schutzkappe.

### Ausführungsformen der Erfindung

In den Figuren sind gleiche Bauteile und Bauteile mit der gleichen Funktion mit den gleichen Bezugszeichen gekennzeichnet.

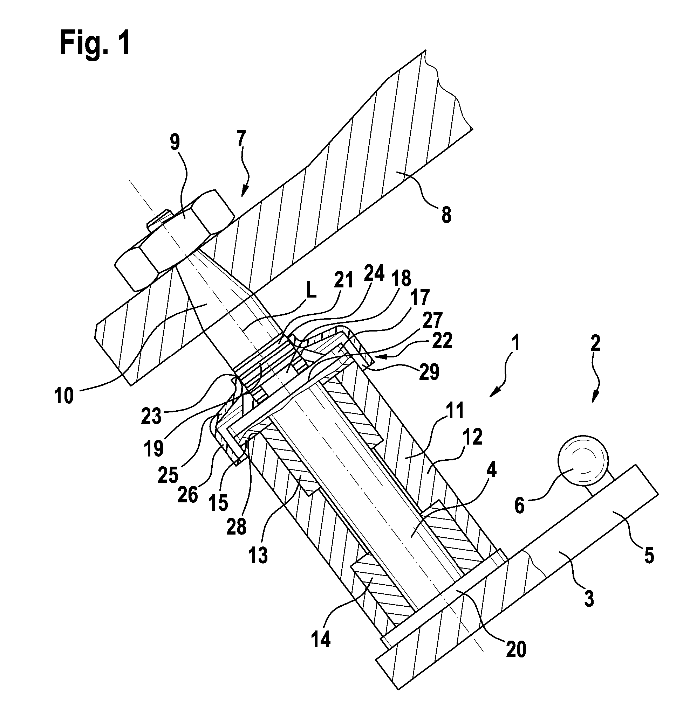

In Fig. 1 ist der grundsätzliche Aufbau einer Wischerwellenanordnung 1, für eine nur ausschnittsweise dargestellte Scheibenwischanlage 2 gezeigt. In dem gezeigten Ausführungsbeispiel handelt es sich bei der Scheibenwischanlage 2 um eine Frontscheibenwischanlage mit einem Kurbelgestänge 3, von dem nur eine drehfest mit einer Wischerwelle 4 verbundene Kurbelplatte 5 gezeigt ist. Die Kurbelplatte 5 kann an das übrige, nicht gezeigte, Gestänge über einen integralen Kugelkopf 6 angelenkt werden. Das Kurbelgestänge 3 wird über einen ebenfalls nicht gezeigten, elektromotorischen Antrieb angetrieben und versetzt die Wischerwelle 4 in eine pendelnde Bewegung um ihre Längsachse L. Im Bereich ihres freien Endes 7 trägt die Wischerwelle 4 einen Wischerarm 8, der mit Hilfe einer Fixiermutter 9 auf einen Konusabschnitt 10 der Wischerwelle 4 gepresst und damit drehfest mit dieser verbunden ist.

Die Wischerwelle 4 durchsetzt in axialer Richtung eine Lagereinheit 11, die in dem gezeigten Ausführungsbeispiel ein zylindrisches Formrohr 12 umfasst, das koaxial zur Wischerwelle 4 angeordnet ist. In dem Formrohr 12 sind zwei in axialer Richtung beabstandete Lagerbuchsen 13, 14 angeordnet, die als Radiallager für die Wischerwelle 4 dienen. Am axialen oberen Ende des Formrohres 12 ist eine obere Anlaufscheibe 15 vorgesehen, die stirnseitig am Formrohr 12 anliegt. Zur axialen Sicherung der Lagereinheit 11 ist eine von der Wischerwelle 4 durchsetzte Federscheibe 17 (Speednut) vorgesehen, die mit radial nach innen weisenden Federzungen 18 mit einer als Rillenstruktur ausgebildeten (oberen) Oberflächenstruktur 19 der Wischerwelle 4 verkrallt ist, und somit ein axiales Verstellen der Lagereinheit 11 in axialer Richtung nach oben sicher verhindert. Die Federscheibe 17 stützt sich in axialer Richtung an der oberen Anlaufscheibe 15 ab, auf die bei entsprechender Formgebung des Formrohrs 12 auch verzichtet werden kann.

Axial unten liegt das Formrohr 12 auf einer unteren Anlaufscheibe 20 auf, die sich wiederum in axialer Richtung an der Kurbelplatte 5 abstützt. Alternativ kann die untere Anlaufscheibe 20, wie später noch erläutert werden wird, durch eine Federscheibe in axialer Richtung gesichert werden, die sich an einer unteren, vorzugsweise ebenfalls rillenförmigen Oberflächenstruktur 19 der Wischerwelle 4 festhält. An dem oberen, mit der rillenförmigen Oberflächenstruktur 19 versehenen Axialabschnitt 21, der die Lagereinheit 11 in axialer Richtung nach oben überragt, ist zusätzlich zu der Federscheibe 17 eine aus Kunststoff ausgebildete Schutzkappe 22 festgelegt. Die von der Wischerwelle 4 durchsetzte Schutzkappe 22 ist derart ausgebildet und angeordnet, dass sie ein Eindringen von Wasser und Schmutz aus axialer und radialer Richtung in die Lagereinheit 11 verhindert. Der eine Durchgangsöffnung 23 (Wasserablauföffnung) für die Wischerwelle 4 begrenzende Randabschnitt 24, mit dem die Schutzkappe 22 formschlüssig mit der Oberflächenstruktur 19 verbunden ist, ist in einem Axialbereich zwischen dem Wischerarm 8 und der Federscheibe 17 angeordnet. Ausgehend von diesem radial inneren Randabschnitt 24 erstreckt sich die Schutzkappe 22 in einem Radialabschnitt 25 im Wesentlichen in radialer Richtung nach außen, wobei der Radialabschnitt 25 nach unten etwas geneigt ausgeformt ist. An den Radialabschnitt 25 schließt radial außen ein umlaufender, sich in axialer Richtung nach unten erstreckender, Rockabschnitt 26 an, der bei dem Ausführungsbeispiel gemäß Fig. 1 im Wesentlichen hohlzylindrisch konturiert ist. Der Rockabschnitt 26 überragt in axialer Richtung eine obere Stirnseite 27 der Lagereinheit 11, die in dem gezeigten Ausführungsbeispiel von der oberen Stirnseite der oberen Anlaufscheibe 15 gebildet ist. Zusätzlich überragt der Rockabschnitt 26 in axialer Richtung eine obere, ringförmige Stirnseite 28 des Formrohres 12, wobei zwischen dem Außenumfang des Formrohres 12 und dem Innenumfang des Rockabschnittes 26 ein Umfangsspalt 29 ausgebildet ist, der einen Reibkontakt zwischen dem pendelnd angetriebenen Rockabschnitt 26 und dem feststehenden Formrohr 12 verhindert.

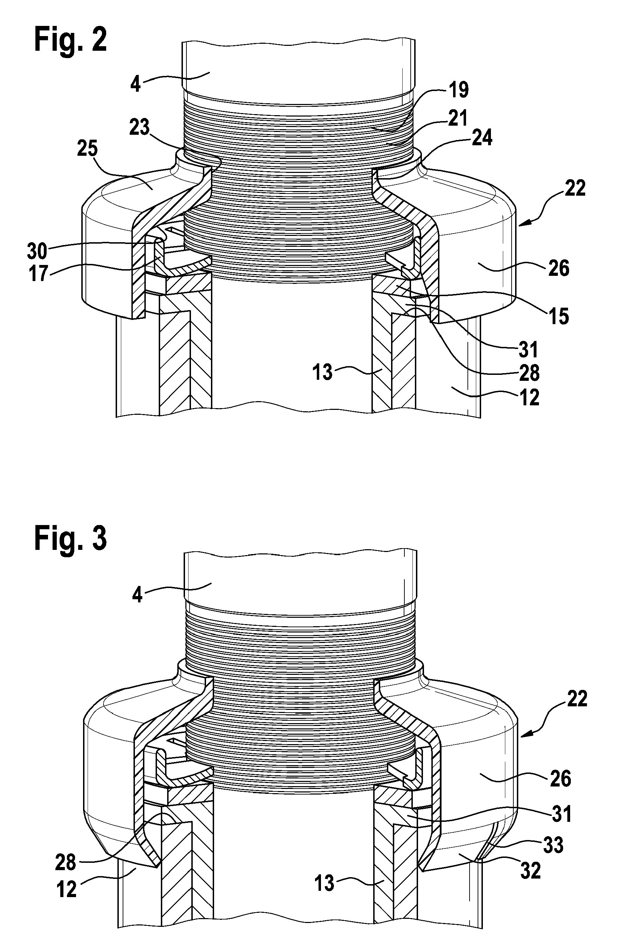

In Fig. 2 ist eine mögliche Ausführungsform der als Spritzgussteil aus Kunststoff ausgebildeten Schutzkappe 22 gezeigt. Zu erkennen ist der die Durchgangsöffnung 23 für die Wischerwelle 4 begrenzende Randabschnitt 24, der an seinem Innenumfang formkongruent zur rillenförmigen Oberflächenstruktur 19 im oberen Axialabschnitt 21 ausgebildet ist. Diese formkongruente Ausformung kann entweder durch eine entsprechende Formgebung im Spritzgusswerkzeug oder bei der Montage durch eine entsprechende Radialkraftbeaufschlagung oder durch eine nach radial innen federnde Wirkung des Radialbschnitts 25 erzielt werden, da aufgrund dieser nach radial innen wirkenden Kräfte ein Negativabbild der metallischen Oberflächenstruktur 19 in den weicheren Randabschnitt 24 einformt. Wie sich weiterhin aus Fig. 2 ergibt, stützt sich die Schutzkappe 22 mit der Innenseite 30 des Radialabschnitts 25 in axialer Richtung an der Federscheibe 17 ab, welche sich in axialer Richtung wiederum an der oberen Anlaufscheibe 15 abstützt. Wie aus Fig. 2 zu erkennen ist, liegt die obere Anlaufscheibe 15 im Gegensatz zu dem Ausführungsbeispiel gemäß Fig. 1 nicht unmittelbar am Formrohr 12 an, sondern an einem nach radial außen umgelenkten Halteabschnitt 31 der oberen Lagerbuchse 13, der die obere Stirnseite 28 des Formrohres 12 in radialer Richtung nach außen übergreift. Wie sich aus Fig. 2 ergibt, überragt der umlaufende, im Wesentlichen zylindrische, hohlzylindrische Rockabschnitt 26 sowohl die Federscheibe 17, als auch die obere Anlaufscheibe 15, den Halteabschnitt 31 der Lagerbuchse 13 sowie die obere Stirnseite 28 des Formrohres 12 in axialer Richtung nach unten und verhindert somit einen Wassereintritt von oben oder von der Seite her in die Lagereinheit 11.

Das Ausführungsbeispiel der Schutzkappe 22 gemäß Fig. 3 entspricht im Wesentlichen dem Ausführungsbeispiel gemäß Fig. 2 so dass zur Vermeidung von Wiederholungen im Folgenden im Wesentlichen nur auf die Unterschiede zu dem in Fig. 2 dargestellten Ausführungsbeispiel eingegangen wird. Im Hinblick auf die Gemeinsamkeiten wird auf die vorhergehende Beschreibung sowie auf Fig. 2 verwiesen. Bei dem Ausführungsbeispiel der Schutzkappe 22 gemäß Fig. 3 schließt in axialer Richtung an den Rockabschnitt 26 der Schutzkappe 22 ein Hintergreifabschnitt 32 an, der wie der im Wesentlichen hohlzylindrische Rockabschnitt 26 vollständig um die Wischerwelle 4 umläuft. Der Hintergreifabschnitt 32 ist nach radial innen gebogen ausgeformt und hintergreift in dem gezeigten Ausführungsbeispiel den in radialer Richtung weisenden Halteabschnitt 31 der oberen Lagerbuchse 13 in radialer Richtung nach innen, wodurch das Eindringen von Wasser in einen Bereich innerhalb der Schutzkappe 22 weiter erschwert wird. Der Halteabschnitt 31 überragt die obere Stirnseite 28 des Formrohres 12 in radialer Richtung nach außen. Um die Montage der Schutzkappe 22 und die Entformung aus einem Spritzgussformwerkzeug zur Herstellung der Schutzkappe 22 zu erleichtern, ist der Hintergreifabschnitt 32 mit mehreren in Umfangsrichtung beabstandeten, sich im Wesentlichen in axialer Richtung erstreckenden Schlitzen 33 versehen, die den Hintergreifabschnitt 32 in mehrere in Umfangsrichtung nebeneinander angeordnete elastische Teilabschnitte unterteilen.

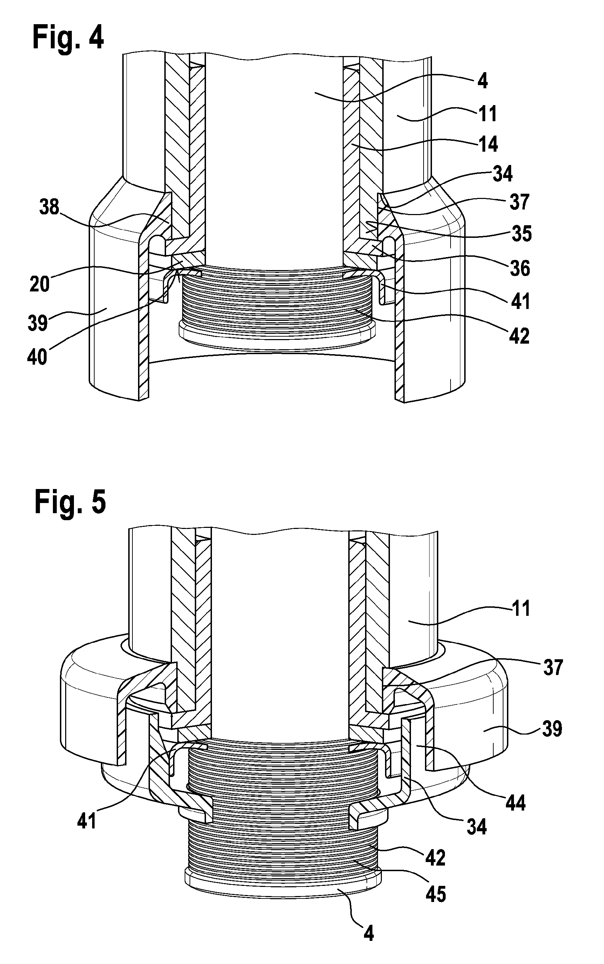

In Fig. 4 ist ein unterer Bereich der Lagereinheit 11 gezeigt. Zu erkennen ist, dass im unteren Randbereich des Formrohres 12 eine umlaufende Abstufung 34 vorgesehen ist, die zusammen mit dem die Grundfläche 35 der Abstufung 34 in radialer Richtung nach außen überragenden Umfangsschulter 36 der unteren Lagerbuchse 14 eine Umfangsnut 37 bildet. In der Umfangsnut 37 ist ein ringförmiger Fixierabschnitt einer unteren Schutzschürze 39 formschlüssig gehalten, wobei die untere Schutzschürze 39 eine untere, von der unteren Anlaufscheibe 20 gebildete Stirnseite 40 der Lagereinheit 11 in axialer Richtung nach unten überragt. Zusätzlich überragt ein hohlzylindrischer unterer Abschnitt der unteren Schutzschürze 39 eine untere Federscheibe 41 (Speednut) in axialer Richtung nach unten, wobei die Federscheibe 41 die Lagereinheit 11 gegen axiales Verschieben nach unten sichert. Die Federscheibe 41 ist in einer als Rillenstruktur ausgebildeten unteren Oberflächenstruktur 42 der Wischerwelle 4 verkrallt.

Bei dem Ausführungsbeispiel gemäß Fig. 5 ist die Schutzschürze 39, die analog zu dem Ausführungsbeispiel gemäß Fig. 4 formschlüssig an der Lagereinheit 11, genauer in einer Umfangsnut 37, gehalten ist, in axialer Richtung kürzer ausgebildet. Um einen ausreichenden Wasserschutz und Schmutzschutz der Lagereinheit 11 zu gewährleisten, greift in einen radial innen von der Schutzschürze 39 umschlossenen Bereich eine untere Schutzkappe 34 ein, die mit einem nach oben ragenden unteren Rockabschnitt 44 eine Art Labyrinthdichtung mit der Schutzschürze 39 bildet. Die untere Schutzkappe 43 ist analog zu der oberen Schutzkappe 22 gemäß Fig. 2 ausgebildet. In dem gezeigten Ausführungsbeispiel ist die untere Schutzkappe 43 formschlüssig in einer rillenförmigen Oberflächenstruktur 42 gehalten, die auch die Federscheibe 41 hält. Die untere Oberflächenstruktur 42 befindet sich in einem axial zur Lagereinheit 11 beabstandeten unteren Axialabschnitt 45 der Wischerwelle 4.

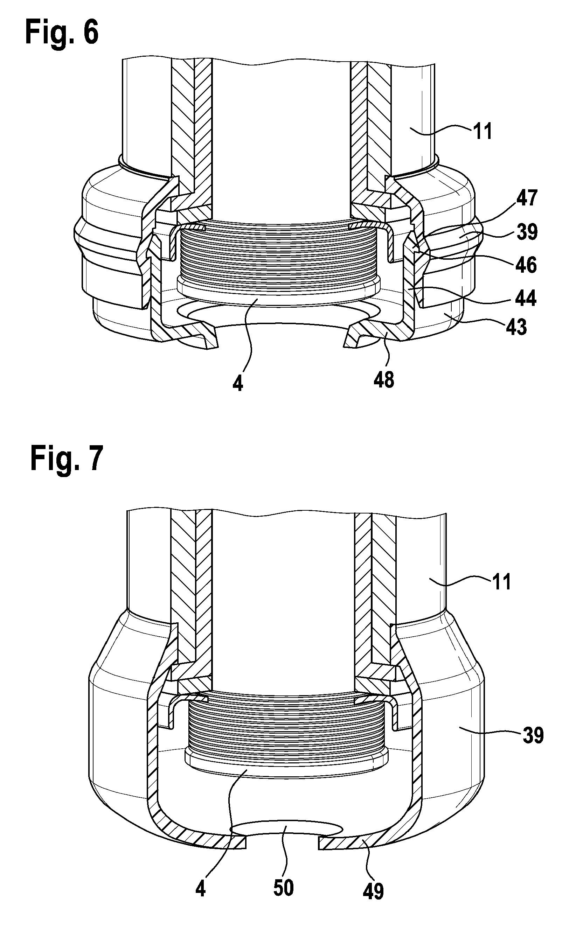

Bei dem Ausführungsbeispiel gemäß Fig. 6 weist die untere, formschlüssig mit der Lagereinheit 11 verbundene, Schutzschürze 39 eine innere Ringnut 46 auf, in die formschlüssig eine untere wannenförmige Schutzkappe 43 mit einem nach radial außen weisenden Rastring 47 eingreift, so dass ein Wasser- oder Schmutzeintritt in einem Bereich radial zwischen der Schutzschürze 39 und der unteren Schutzkappe 43 sicher verhindert wird. Die untere Schutzkappe 43 erstreckt sich ausgehend von der Ringnut 46 mit ihrem unteren Rockabschnitt 44 zunächst in axialer Richtung nach unten und daran anschließend mit einem unteren Radialabschnitt 48 in radialer Richtung nach innen, vorzugsweise zumindest näherungsweise bis an die Wischerwelle 4, um somit ein Eindringen von Spritzwasser und/oder Schmutz aus einer Richtung von axial unten in die Lagereinheit 11 hinein sicher zu verhindern.

Bei dem Ausführungsbeispiel gemäß Fig. 7 ist an der Lagereinheit 11, analog zu den zuvor beschriebenen Beispielen, eine untere Schutzschürze 39 festgelegt, die sich in axialer Richtung nach unten erstreckt. In ihrem axial unteren Bereich weist die Schutzschürze 39 einen nach radial innen weisenden Abschnitt 49 auf. Zentrisch wird von dem Abschnitt 49 eine Wasserablauföffnung 50 für Kondenswasser, etc. begrenzt. Bei dem in Fig. 7 gezeigten Ausführungsbeispiel übernimmt die Schutzschürze 39 zusätzlich zu der Schutzschürzenfunktion die Funktion der unteren Schutzkappe 43 (vgl. Fig. 6) - anders ausgedrückt ist die untere Schutzschürze 39 einteilig mit einer unteren, nach oben gerichteten Schutzkappe 43 ausgebildet.

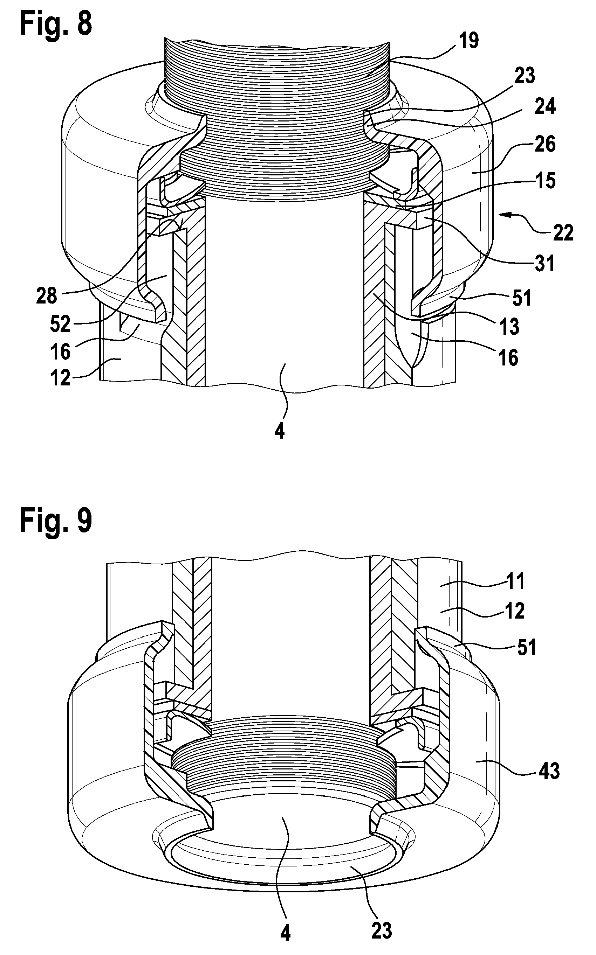

In Fig. 8 ist eine obere Schutzkappe 22 gezeigt, die bei identischer Ausbildung, wie aus Fig. 9 ersichtlich ist, auch als untere Schutzkappe 43 eingesetzt werden kann.

Bei der in Fig. 8 gezeigten Anordnung der Schutzkappe 22 als obere Schutzkappe ist diese klemmend an der Oberflächenstruktur 19 (Rillenstruktur) mit ihrem die Durchgangsöffnung 23 begrenzenden Randabschnitt 24 festgelegt. Der Rockabschnitt 26 der oberen Schutzkappe 22 überragt in axialer Richtung sowohl die obere Anlaufscheibe 15, den Halteabschnitt 31 der oberen Lagerbuchse 13 sowie die obere Stirnseite 28 des Formrohres 12. Im axial unteren Randbereich des Rockabschnittes 26 geht letzterer über in einen radial nach innen geneigten Endabschnitt 51 zwischen dem und dem Formrohr 12 ein minimaler Umfangsspalt gebildet ist. Genauer gesagt ist dieser Umfangspalt realisiert zwischen dem Endabschnitt 51 der Schutzkappe 22 und einem abgestuften Bereich 52 des Formrohres 12, der einen geringeren Außendurchmesser aufweist, als das Formrohr 12 dem axial angrenzenden, nicht abgestuften Bereich. Um eine Kapillarwirkung des minimalen Umfangsspaltes und damit ein Einsaugen von Wasser in die Lagereinheit zu verhindern, sind in das Formrohr mehrere in Umfangsrichtung beabstandete Luftkanäle 16 eingebracht, über die ein Luftaustausch zwischen dem von der Schutzkappe 22 umschlossen Bereich und der Atmosphäre stattfinden kann. Die Luftkanäle 16 erstrecken sich im Wesentlichen in axialer Richtung.

Wie erwähnt, ist die in Fig. 9 gezeigte untere Schutzkappe 43 identisch ausgebildet wie die obere Schutzkappe 22 gemäß Fig. 8. Die untere Schutzkappe 43 ist mit ihrem in Fig. 9 oberen Endabschnitt 51 klemmend am Außenumfang des Formrohres 12 der Lagereinheit 11 festgelegt. Die Durchgangsöffnung 23 (Wasserablauföffnung) ist mit Axialabstand zu dem unteren Wellenende der Wischerwelle 4 angeordnet und dient somit als Wasserabfluss für gegebenenfalls unter die Schutzkappe 43 eindringendes Wasser, beispielsweise für Kondenswasser. Zusätzlich oder alternativ kann die untere Schutzkappe 43, vorzugsweise mit ihrem Endabschnitt 51, formschlüssig an der Lagereinheit 11 festgelegt werden.

## Patentansprüche

1. Wischerwellenanordnung für eine Scheibenwischanlage (2), insbesondere in einem Kraftfahrzeug, mit einer pendelnd antreibbaren Wischerwelle (4), mit einer von der Wischwelle (4) durchsetzten oberen Schutzkappe (22) zum Schutz einer Lagereinheit (11) für die Welle vor Wasser und/oder Schmutz,
**dadurch gekennzeichnet,**
**dass** die obere Schutzkappe (22) gegen axiales Verstellen entlang der Wischerwelle (4) an einer Oberflächenstruktur (19) der Wischerwelle (4) gesichert ist.

2. Wischerwellenanordnung nach Anspruch 1,
**dadurch gekennzeichnet,**
**dass** an der Oberflächenstruktur (19) eine Federscheibe (17) als Axialsicherung für die Lagereinheit (11) gehalten ist.

3. Wischerwellenanordnung nach einem der Ansprüche 1 oder 2,
**dadurch gekennzeichnet,**
**dass** die Oberflächenstruktur (19), zumindest abschnittsweise, als Rillenstruktur ausgebildet ist.

4. Wischerwellenanordnung nach einem der vorhergehenden Ansprüche,
**dadurch gekennzeichnet,**
**dass** die, vorzugsweise aus Kunststoff ausgebildete, obere Schutzkappe (22) einen um die Wischerwelle (4) umlaufenden Rockabschnitt (26) aufweist, der sich in axialer Richtung über eine obere Stirnseite (27) der Lagereinheit (11) hinaus erstreckt.

5. Wischerwellenanordnung nach Anspruch 4,
**dadurch gekennzeichnet,**
**dass** der Rockabschnitt (26) der oberen Schutzkappe (22) einen Hintergreifabschnitt (32) aufweist, mit dem der Rockabschnitt (26) ein, insbesondere oberes, Bauelement der Lagereinheit (11) in radialer Richtung nach innen hintergreift.

6. Wischerwellenanordnung nach einem der vorhergehenden Ansprüche,
**dadurch gekennzeichnet,**
**dass** die obere Schutzkappe (22), vorzugsweise in ihrem unteren Randbereich, geschlitzt ist.

7. Wischerwellenanordnung nach einem der vorhergehenden Ansprüche,
**dadurch gekennzeichnet,**
**dass** eine an der Lagereinheit (11) festegelegte Schutzschürze (39) vorgesehen ist, die die Lagereinheit (11) in axialer Richtung nach unten überragt.

8. Wischerwellenanordnung nach Anspruch 7,
**dadurch gekennzeichnet,**
**dass** die Schutzschürze (39) einen sich nach radial innen erstreckenden, ein, insbesondere unteres, Bauelement der Lagereinheit (11) hintergreifenden unteren Abschnitt aufweist.

9. Wischerwellenanordnung nach einem der vorhergehenden Ansprüche,
**dadurch gekennzeichnet,**
**dass** eine untere Schutzkappe (43), vorzugsweise mit einem umlaufenden und sich in axialer Richtung nach oben erstreckenden Rockabschnitt (44), vorgesehen ist.

10. Wischerwellenanordnung nach Anspruch 9,
**dadurch gekennzeichnet,**
**dass** die untere Schutzkappe (43) an der unteren Schutzschürze (39) festegelegt ist.

11. Wischerwellenanordnung nach einem der Ansprüche 9 oder 10,
**dadurch gekennzeichnet,**
**dass** die untere Schutzkappe (43) gegen axiales Verstellen entlang der Wischerwelle (4) an einer Oberflächenstruktur (42) der Wischerwelle (4) gesichert ist.

12. Scheibenwischanlage, insbesondere Frontwischanlage, mit mindestens einer Wischerwellenanordnung (1) nach einem der vorhergehenden Ansprüche.
